(19) Europäisches Patentamt
European Patent Office
Office européen des brevets

(11) **EP 3 737 491 B1**

(12) **EUROPÄISCHE PATENTSCHRIFT**

(45) Veröffentlichungstag und Bekanntmachung des Hinweises auf die Patenterteilung:
**11.05.2022 Patentblatt 2022/19**

(21) Anmeldenummer: **19715057.6**

(22) Anmeldetag: **29.03.2019**

(51) Internationale Patentklassifikation (IPC):
**B01D 53/94** (2006.01) **B01J 23/63** (2006.01)
**B01J 35/00** (2006.01) **B01J 35/04** (2006.01)
**F01N 3/28** (2006.01) **F01N 3/035** (2006.01)
**B01J 35/10** (2006.01) **B01J 37/02** (2006.01)
**B01J 23/46** (2006.01)

(52) Gemeinsame Patentklassifikation (CPC):
**F01N 3/2803; B01D 53/945; B01J 23/464;
B01J 23/63; B01J 35/0006; B01J 35/04;
B01J 35/1014; B01J 35/1019; B01J 37/0201;
B01J 37/0228; F01N 3/035;** B01D 2255/1023;
B01D 2255/1025; B01D 2255/2061;
B01D 2255/2063; (Forts.)

(86) Internationale Anmeldenummer:
**PCT/EP2019/057995**

(87) Internationale Veröffentlichungsnummer:
**WO 2020/200398 (08.10.2020 Gazette 2020/41)**

(54) **KATALYTISCH AKTIVES PARTIKELFILTER**

CATALYTICALLY ACTIVE PARTICULATE FILTER

FILTRE À PARTICULES À ACTIVITÉ CATALYTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.11.2020 Patentblatt 2020/47**

(60) Teilanmeldung:
**22156751.4**

(73) Patentinhaber: **UMICORE AG & Co. KG**
**63457 Hanau-Wolfgang (DE)**

(72) Erfinder:
• **KUCEROVA, Gabriela**
**89250 Senden (DE)**
• **SCHOENHABER, Jan**
**64287 Darmstadt (DE)**
• **DEIBEL, Naina**
**64319 Pfungstadt (DE)**
• **GOTTHARDT, Meike**
**60385 Frankfurt (DE)**

(56) Entgegenhaltungen:
**EP-A1- 3 257 571      CN-A- 108 295 851
DE-A1-102005 005 663  JP-A- 2014 117 680
JP-B1- 6 487 982      US-A1- 2009 193 796
US-A1- 2018 021 767**

(52) Gemeinsame Patentklassifikation (CPC): (Forts.)
B01D 2255/2066; B01D 2255/407; B01D 2255/908;
B01D 2255/9155; B01D 2258/014; F01N 2330/06;
F01N 2510/068; Y02T 10/12

**Beschreibung**

Die vorliegende Erfindung betrifft ein katalytisch aktives Partikelfilter, das sich insbesondere für die Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren eignet.

Abgase von mit stöchiometrischem Luft/Kraftstoff-Gemisch betriebenen Verbrennungsmotoren, also z. B. mit Benzin oder Erdgas betriebene Ottomotoren, werden in herkömmlichen Verfahren mit Hilfe von Drei-Wege-Katalysatoren gereinigt. Diese sind in der Lage, die drei wesentlichen gasförmigen Schadstoffe des Motors, nämlich Kohlenwasserstoffe, Kohlenmonoxid und Stickoxide, gleichzeitig zu unschädlichen Komponenten umzusetzen. Stöchiometrisch heißt, dass im Mittel genau so viel Luft zur Verbrennung des im Zylinder vorhandenen Kraftstoffs zur Verfügung steht, wie für eine vollständige Verbrennung benötigt wird. Das Verbrennungsluftverhältnis $\lambda$ (A/F-Verhältnis; Luft/Kraftstoffverhältnis) setzt die tatsächlich für eine Verbrennung zur Verfügung stehende Luftmasse $m_{L,tats}$ ins Verhältnis zur stöchiometrischen Luftmasse $m_{L,st}$:

$$\lambda = \frac{m_{L,tats}}{m_{L,st}}$$

Ist $\lambda < 1$ (z. B. 0,9) bedeutet dies "Luftmangel", man spricht von einem fetten Abgasgemisch, $\lambda > 1$ (z. B. 1,1) bedeutet "Luftüberschuss" und das Abgasgemisch wird als mager bezeichnet. Die Aussage $\lambda = 1,1$ bedeutet, dass 10% mehr Luft vorhanden ist, als zur stöchiometrischen Reaktion notwendig wäre.

Neben den gasförmigen Schadstoffen enthält das Abgas von Verbrennungsmotoren aber auch feinste Partikel (PM), die aus der unvollständigen Verbrennung des Kraftstoffs resultieren und im Wesentlichen aus Ruß bestehen. Im Unterschied zur Partikelemission von Dieselmotoren sind die Partikel im Abgas stöchiometrisch betriebener Verbrennungsmotoren, wie Ottomotoren, sehr klein und weisen eine durchschnittliche Partikelgröße kleiner 1 $\mu$m auf. Typische Partikelgrößen liegen im Bereich von 10 nm bis 200 nm. Des Weiteren ist die emittierte Partikelmenge sehr gering und bewegt sich im Bereich von 2 mg/km bis 4 mg/km.

Mit der europäischen Abgasnorm Euro 6c ist eine Umstellung des Grenzwertes für solche Partikel vom Partikelmassengrenzwert auf einen kritischeren Partikelzahlgrenzwert von $6 \times 10^{11}$/km (im Worldwide harmonized Light vehicles Test Cycle - WLTP) verbunden. Damit entsteht Bedarf nach Abgasreinigungskonzepten für stöchiometrisch betriebene Verbrennungsmotoren, die effektiv arbeitende Einrichtungen zur Entfernung von Partikeln umfassen.

Im Bereich der Reinigung von Abgas von mager betriebenen Motoren, also insbesondere von Dieselmotoren, haben sich Wandflussfilter aus keramischen Materialien, wie z.B. Siliciumcarbid, Aluminiumtitanat und Cordierit bewährt. Diese sind aus einer Vielzahl von parallelen Kanälen aufgebaut, die durch poröse Wände gebildet werden. Die Kanäle sind wechselseitig an einem der beiden Enden des Filters verschlossen, so dass Kanäle A gebildet werden, die an der ersten Seite des Filters offen und auf der zweiten Seite des Filters verschlossen sind, sowie Kanäle B, die an der ersten Seite des Filters verschlossen und auf der zweiten Seite des Filters offen sind. Das beispielsweise in die Kanäle A einströmende Abgas kann den Filter nur über die Kanäle B wieder verlassen, und muss zu diesem Zweck durch die porösen Wände zwischen den Kanälen A und B durchfließen. Beim Durchtritt des Abgases durch die Wand werden die Partikel zurückgehalten und das Abgas gereinigt.

Die so zurückgehaltenen Partikel müssen nachfolgend abgebrannt bzw. oxidiert werden, um ein Verstopfen des Filters bzw. einen inakzeptablen Anstieg des Gegendrucks des Abgassystems zu verhindern. Zu diesem Zweck wird beispielsweise das Wandflussfilter mit katalytisch aktiven Beschichtungen versehen, die die Zündtemperatur von Ruß herabsetzen.

Es ist bereits bekannt, solche Beschichtungen auf die porösen Wände zwischen den Kanälen aufzubringen (sogenannte auf-Wand-Beschichtung) oder in die porösen Wände einzubringen (sogenannte in-Wand-Beschichtung). Die EP1657410A2 beschreibt auch bereits eine Kombination beider Beschichtungsarten, d. h. ein Teil des katalytisch aktiven Materials liegt in den porösen Wänden und ein anderer Teil auf den porösen Wänden vor.

Das Konzept, Partikel mittels Wandflussfiltern aus dem Abgas zu entfernen, ist bereits auf die Reinigung von Abgas von mit stöchiometrischem Luft/Kraftstoff-Gemisch betriebenen Verbrennungsmotoren übertragen worden, siehe zum Beispiel die EP 2042226 A2. Gemäß deren Lehre trägt ein Wandflussfilter zwei übereinander angeordnete Schichten, wobei eine in der porösen Wand und die andere auf der porösen Wand angeordnet sein kann. Ein ähnliches Konzept verfolgt die DE 102011050788 A1. Dort enthalten die porösen Filterwände ein Katalysatormaterial eines Drei-Wege-Katalysators, während zusätzlich ein Katalysatormaterial eines Drei-Wege-Katalysators auf Teilbereiche der Filterwände aufgebracht ist.

FR3020091A1 offenbart ein Partikelfilter, das eine Beschichtung in den porösen Wänden, sowie Beschichtungen auf den Oberflächen der Eingangs- und Ausgangskanäle trägt. Letztere erstrecken sich auf einem Teilbereich der Filterlänge und zwar sowohl auf den Eingangs- wie auf den Ausgangsoberflächen auf der Seite des Filters, an der das Abgas eintritt.

EP3205388A1 offenbart einen Partikelfilter, der zwei Beschichtungen innerhalb der porösen Filterwand beinhaltet, die sich jeweils nur über einen Teilbereich des Filtersubstrats erstrecken, wobei die beiden Beschichtungen unterschiedliche Edelmetallspezies beinhalten.

EP3207989A1 und EP3254757A1 offenbaren einen Partikelfilter, der zwei Beschichtungen innerhalb der porösen Filterwand beinhaltet, die sich jeweils nur über einen Teilbereich des Filtersubstrats erstrecken, wobei die Summe der Länge der beiden Beschichtungen größer ist als die Gesamtlänge des Substrats, jedoch kleiner ist als die doppelte Substratlänge.

Weitere Dokumente, die mit katalytisch aktiven Beschichtungen versehene Filtersubstrate beschreiben, sind EP3205388A1, EP3207977A1, EP3207978A1, EP3207987A1, EP3207989A1, EP3207990A1 und EP3162428A1, WO2016133086A1, WO2016133085A1, WO18056246A1, WO17109514A1, US2009193796A1, JP2014117680A und CN10829585A. Es besteht weiter Bedarf nach katalytisch aktiven Partikelfiltern, die die Funktionalitäten eines Partikelfilters und eines Dreiwegekatalysators vereinen und dabei helfen, die künftig geltenden Grenzwerte einzuhalten. Dabei soll das Partikelfilter einen möglichst hohen Umsetzungsgrad für die gasförmigen Schadstoffe und Partikel aufweisen, insbesondere auch nach einer Alterung, die einer Belastung gemäß der gesetzlichen Dauerlaufanforderungen entspricht. Zugleich sollte das Filter einen möglichst niedrigen Staudruck aufweisen, damit die Motorleistung erhalten bleibt und ein möglichst niedriger Kraftstoffverbrauch verwirklicht werden kann. Überraschenderweise konnte eine signifikante Verbesserung der katalytischen Aktivität durch die Beschichtung von zwei verschiedenen katalytischen Beschichtungen in die poröse Filterwand über die gesamte Länge des keramischen Filtersubstrats erreicht werden. Gegenüber dem Stand der Technik (WO16133085A1) zeigen erfindungsgemäße Filter einen deutlichen Vorteil im Anspringverhalten nach Alterung und im Amplitudentest. Auch ein Vorteil von erfindungsgemäßen Filtern im Gegendruck gegenüber zonierten Filtern ist ersichtlich.

Die vorliegende Erfindung betrifft daher ein Partikelfilter zur Entfernung von Partikeln, Kohlenmonoxid, Kohlenwasserstoffen und Stickoxiden aus dem Abgas von mit stöchiometrischem Luft/Kraftstoffgemisch betriebenen Verbrennungsmotoren, das ein Wandflussfilter der Länge L und zwei verschiedene Beschichtungen Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen $O_E$ bzw. $O_A$ bilden und wobei die Kanäle E am zweiten Ende und die Kanäle A am ersten Ende verschlossen sind, wobei sich die beiden Beschichtungen Y und Z in den porösen Wänden befinden und sich ausgehend vom ersten Ende des Wandflussfilters über die gesamte Länge L erstrecken, dabei eine der Beschichtungen zuerst in die Poren der Filterwand des Substrats eingebracht wird, bevor im Anschluss die andere Beschichtung in entgegengesetzter Beschichtungsrichtung in die Filterwand des Substrats eingebracht wird, und beide aktives Aluminiumoxid, eine Sauerstoffspeicherkomponente und mindestens ein Platingruppenmetall aufweisen, und wobei Beschichtung Z als Sauerstoffspeicherkomponente zwei unterschiedliche Cer/Zirkonium/Seltenerdmetall-Mischoxide umfasst, und das Gewichtsverhältnis von aktivem Aluminiumoxid zur Summe der beiden Cer/Zirkonium/Seltenerdmetall-Mischoxide im Bereich von 10:90 bis 60:40 liegt.

Die Beschichtungen Y und Z sind katalytisch aktiv, insbesondere bei Betriebstemperaturen von 250 °C bis 1100 °C. Sie enthalten eine oder mehrere Edelmetalle, die auf einem oder mehreren Trägermaterialien fixiert sind, sowie mindestens eine Sauerstoffspeicherkomponente. Als Sauerstoffspeicherkomponenten werden vorliegend Cer/Zirkonium/Seltenerdmetall-Mischoxide angesehen. Der Begriff "Cer/Zirkonium/Seltenerdmetall-Mischoxid" im Sinne vorliegender Erfindung schließt physikalische Mischungen aus Ceroxid, Zirkoniumoxid und Seltenerdoxid aus. Vielmehr sind "Cer/Zirkonium/Seltenerdmetall-Mischoxide" durch eine weitgehend homogene, dreidimensionale Kristallstruktur gekennzeichnet, die idealerweise, mindestens zu mehr als 90 Gew.-%, bevorzugt mehr als 95 Gew.-%, frei ist von Phasen aus reinem Ceroxid, Zirkoniumoxid bzw. Seltenerdoxid. Je nach Herstellungsverfahren können aber auch nicht vollständig homogene Produkte entstehen, die in der Regel ohne Nachteil verwendet werden können. Im Übrigen umfasst der Begriff Seltenerdmetall bzw. Seltenerdmetalloxid im Sinne vorliegender Erfindung kein Cer bzw. kein Ceroxid.

Als Seltenerdmetalloxide in den Cer/Zirkonium/Seltenerdmetall-Mischoxiden kommen beispielsweise Lanthanoxid, Yttriumoxid, Praseodymoxid, Neodymoxid und/oder Samariumoxid in Betracht.

Bevorzugt sind Lanthanoxid, Yttriumoxid und/oder Praseodymoxid. Besonders bevorzugt als Seltenerdmetalle sind in diesem Zusammenhang Lanthanoxid und/oder Yttriumoxid und ganz besonders bevorzugt sind Lanthanoxid und Yttriumoxid, Yttriumoxid und Praseodymoxid, sowie Lanthanoxid und Praseodymoxid. In Ausführungsformen der vorliegenden Erfindung sind die Sauerstoffspeicherkomponenten frei von Neodymoxid.

Insbesondere Beschichtung Z enthält eine zusätzliche, also zwei unterschiedliche Cer/Zirkonium/Seltenerdmetall-Mischoxide. Die Cer/Zirkonium/Seltenerdmetall-Mischoxide in Beschichtung Z unterscheiden sich dabei hinsichtlich mindestens einer der enthaltenen Komponenten. Dies umfasst auch den Fall, bei dem z.B. gleiche Bestandteile in den beiden Cer/Zirkonium/Seltenerdmetall-Mischoxide vorhanden sind, diese jedoch in unterschiedlichen Mengen vorliegen. Überraschenderweise hat sich gezeigt, dass eine Kombination unterschiedlicher Cer/Zirkonium/Seltenerdmetall-Mischoxide zumindest in der Beschichtung Z eine stark verbesserte Umsetzung gasförmiger Schadstoffe nach harter Alterung bewirken kann.

In der vorliegenden Erfindung liegt in Beschichtung Z das Gewichtsverhältnis von aktivem Aluminiumoxid zur Summe der beiden Cer/Zirkonium/Seltenerdmetall-Mischoxide im Bereich von 10:90 bis 60:40, vorzugsweise im Bereich von 20:80 bis 50:50 und besonders bevorzugt im Bereich von 25:75 bis 35:65. Die Beschichtung Z umfasst in bevorzugten Ausführungsformen jeweils aktives, insbesondere Lanthan-stabilisiertes Aluminiumoxid in Mengen von 10 bis 60 Gew.-%, bevorzugt 20 bis 50, besonders bevorzugt 25 bis 35 Gew.-%, sowie Sauerstoffspeicherkomponenten in Mengen von 40 bis 90 Gew.-%, bevorzugt 50 bis 80 Gew.-%, besonders bevorzugt 65 bis 75 Gew.-%, jeweils bezogen auf die Summe der Gewichte von aktivem Aluminiumoxid und Sauerstoffspeicherkomponenten in der Beschichtung Z.

Die Beschichtung Z umfasst demnach in Ausführungsformen vorzugsweise zwei voneinander verschiedene Cer/Zirkonium/Seltenerdmetall-Mischoxide, wobei das Gewichtsverhältnis vom ersten Cer/Zirkonium/Seltenerdmetall-Mischoxid zum zweiten Cer/Zirkonium/Seltenerdmetall-Mischoxid im Bereich von 4:1 bis 1:4, vorzugsweise im Bereich von 3:1 bis 1:3 und besonders bevorzugt im Bereich von 2:1 bis 1:2 liegt.

In Ausführungsformen der vorliegenden Erfindung umfasst Beschichtung Z zwei Cer/Zirkonium/Seltenerdmetall-Mischoxide, wobei das eine Cer/Zirkonium/Seltenerdmetall-Mischoxid vorzugsweise einen höheren Gehalt an Zirkoniumoxid aufweist als das andereCer/Zirkonium/Seltenerdmetall-Mischoxid. In Ausführungsformen der vorliegenden Erfindung umfasst Beschichtung Z zwei Cer/Zirkonium/Seltenerdmetall-Mischoxide, wobei das eine Cer/Zirkonium/Seltenerdmetall-Mischoxid vorzugsweise einen geringeren Gehalt an Ceroxid aufweist als das andere Cer/Zirkonium/Seltenerdmetall-Mischoxid.

In Ausführungsformen der vorliegenden Erfindung liegt in Beschichtung Y das Gewichtsverhältnis von aktivem Aluminiumoxid zum vorzugsweise einen Cer/Zirkonium/Seltenerdmetall-Mischoxids im Bereich von 25:75 bis 75:25, vorzugsweise im Bereich von 70:30 bis 30:70 und besonders bevorzugt im Bereich von 65:35 bis 35:65. Die Beschichtung Y umfasst in bevorzugten Ausführungsformen jeweils insbesondere Lanthan-stabilisiertes Aluminiumoxid in Mengen von 25 bis 70 Gew.-%, bevorzugt 30 bis 65, besonders bevorzugt 35 bis 60 Gew.-%, sowie Sauerstoffspeicherkomponenten in Mengen von 30 bis 75 Gew.-%, bevorzugt 35 bis 70 Gew.-%, besonders bevorzugt 40 bis 65 Gew.-%, jeweils bezogen auf die Summe der Gewichte von aktivem Aluminiumoxid und Sauerstoffspeicherkomponenten in der Beschichtung Y.

In der vorliegenden Erfindung wird entweder Beschichtung Z zuerst in die Poren der Filterwand des Substrats eingebracht, bevor im Anschluss die Beschichtung Y in die Beschichtung Z beinhaltende Filterwand eingebracht wird. Dabei wird Beschichtung Y in entgegengesetzter Beschichtungs-richtung zu der Beschichtung Z aufgebracht. Oder in der vorliegenden Erfindung wird Beschichtung Y zuerst in die Poren der Filterwand des Substrats eingebracht, bevor im Anschluss die Beschichtung Z in die Beschichtung Y beinhaltende Filterwand eingebracht wird. Auch hier gilt, dass die Beschichtung mit der zweiten Beschichtung entgegen der der ersten erfolgt.

Erfindungsgemäß kann das Masseverhältnis von Ceroxid zu Zirkoniumoxid in den Cer/Zirkonium/Seltenerdmetall-Mischoxiden der Beschichtungen Y bzw. Z in weiten Grenzen variieren. Es beträgt beispielsweise 0,1 bis 1,5, bevorzugt 0,2 bis 1,25 oder 0,3 bis 1. Weiterhin ist bevorzugt, wenn das erste Cer/Zirkonium/Seltenerdmetall-Mischoxid von Beschichtung Z ein Gewichtsverhältnis von Ceroxid zu Zirkoniumoxid von 0,1 bis 0,7 aufweist, welches kleiner ist als das in dem zweiten Cer/Zirkonium/Seltenerdmetall-Mischoxid, welches ein Gewichtsverhältnis von Ceroxid zu Zirkoniumoxid von 0,5 bis 1,5 aufweist. Weitere mehr bevorzugte Ausführungsformen enthalten in der Beschichtung Z ein erstes Cer/Zirkonium/Seltenerdmetall-Mischoxid mit einem Gewichtsverhältnis von Ceroxid zu Zirkoniumoxid von 0,2 bis 0,6 und ein zweites Cer/Zirkonium/Seltenerdmetall-Mischoxid mit einem Gewichtsverhältnis von Ceroxid zu Zirkoniumoxid von 0,6 bis 1,2. Wieder andere ganz bevorzugte Ausführungsformen enthalten ein erstes Cer/Zirkonium/Seltenerdmetall-Mischoxid mit einem Gewichtsverhältnis von Ceroxid zu Zirkoniumoxid von 0,3 bis 0,5 und das zweite Cer/Zirkonium/Seltenerdmetall-Mischoxid weist ein Gewichtsverhältnis von Ceroxid zu Zirkoniumoxid von 0,7 bis 1,0 auf. Weiterhin ist bevorzugt, wenn das Cer/Zirkonium/Seltenerdmetall-Mischoxid von Beschichtung Y ein Gewichtsverhältnis von Ceroxid zu Zirkoniumoxid von 0,1 bis 0,7 aufweist, bevorzugt ein Gewichtsverhältnis von Ceroxid zu Zirkoniumoxid von 0,2 bis 0,6 und besonders bevorzugt ein Gewichtsverhältnis von Ceroxid zu Zirkoniumoxid von 0,3 bis 0,5.

In einer bevorzugten Ausführungsform ist das erfindungsgemäße Partikelfilter so ausgestaltet, dass das erste Cer/Zirkonium/Seltenerdmetall-Mischoxid von Beschichtung Z einen Ceroxid-Gehalt von 10 % bis 40 % bezogen auf das Gewicht des ersten Cer/Zirkonium/Seltenerdmetall-Mischoxids, mehr bevorzugt von 15 % bis 35 % und ganz besonders bevorzugt von 20 % bis 30 % bezogen auf das Gewicht des ersten Cer/Zirkonium/Seltenerdmetall-Mischoxids aufweist.

Demgegenüber liegt der Zirkoniumoxid-Gehalt im ersten Cer/Zirkonium/Seltenerdmetall-Mischoxid von Beschichtung Z bei 40 % bis 90 % bezogen auf das Gewicht des ersten Cer/Zirkonium/Seltenerdmetall-Mischoxids. Vorteilhaft ist, wenn der Zirkoniumoxid-Gehalt im ersten Cer/Zirkonium/Seltenerdmetall-Mischoxid von Beschichtung Z zwischen 50 % bis 75 %, ganz bei 55 % bis 65 % bezogen auf das Gewicht des ersten Cer/Zirkonium/Seltenerdmetall-Mischoxids liegt.

Gleichfalls sollte im zweiten Cer/Zirkonium/Seltenerdmetall-Mischoxid von Beschichtung Z ein Ceroxid-Gehalt von 35 % bis 65 % bezogen auf das Gewicht des zweiten Cer/Zirkonium/Seltenerdmetall-Mischoxids vorherrschen.

Vorteilhafter ist, wenn im zweiten Cer/Zirkonium/Seltenerdmetall-Mischoxid von Beschichtung Z einen Ceroxid-Gehalt von 15 % bis 55 %, ganz bevorzugt von 20 % bis 50 % bezogen auf das Gewicht des zweiten Cer/Zirkonium/Seltenerdmetall-Mischoxids gegeben ist.

Demgegenüber liegt der Zirkoniumoxid-Gehalt im zweiten Cer/Zirkonium/Seltenerdmetall-Mischoxid von Beschichtung Z bei 20 % bis 60 % bezogen auf das Gewicht des ersten Cer/Zirkonium/Seltenerdmetall-Mischoxids. Vorteilhaft ist, wenn der Zirkoniumoxid-Gehalt im ersten Cer/Zirkonium/Seltenerdmetall-Mischoxid von Beschichtung Z zwischen 40 % bis 70 %, ganz bei 50 % bis 65 % bezogen auf das Gewicht des ersten Cer/Zirkonium/Seltenerdmetall-Mischoxids liegt.

In einer bevorzugten Ausführungsform ist das erfindungsgemäße Partikelfilter so ausgestaltet, dass das insbesondere eine Cer/Zirkonium/Seltenerdmetall-Mischoxid von Beschichtung Y einen Ceroxid-Gehalt von 10 % bis 40 % bezogen auf das Gewicht des Cer/Zirkonium/Seltenerdmetall-Mischoxids, mehr bevorzugt von 15 % bis 35 % und ganz besonders bevorzugt von 20 % bis 30 % bezogen auf das Gewicht des Cer/Zirkonium/Seltenerdmetall-Mischoxids aufweist.

Demgegenüber liegt der Zirkoniumoxid-Gehalt im bevorzugt einen Cer/Zirkonium/Seltenerdmetall-Mischoxid von Beschichtung Y bei 40 % bis 90 % bezogen auf das Gewicht des Cer/Zirkonium/Seltenerdmetall-Mischoxids. Vorteilhaft ist, wenn der Zirkoniumoxid-Gehalt im bevorzugt einen Cer/Zirkonium/Seltenerdmetall-Mischoxid von Beschichtung Y zwischen 50 % bis 75 %, ganz bei 55 % bis 65 % bezogen auf das Gewicht des Cer/Zirkonium/Seltenerdmetall-Mischoxids liegt.

Erfindungsgemäß weiter bevorzugt ist, wenn sämtliche verwendeten Cer/Zirkonium/Seltenerdmetall-Mischoxide in den Beschichtungen Y und Z mit Lanthanoxid dotiert sind, so dass bevorzugt der Gehalt an Lanthanoxid >0 Gew.-% bis 10 Gew.-% ganz besonders bevorzugt von 1 Gew.-% bis 8 Gew.-% (bezogen auf das jeweilige Mischoxid). Diese Lanthanoxid enthaltende Cer/Zirkonium/Seltenerdmetall-Mischoxide weisen besonders vorteilhafter ein Masseverhältnis von Lanthanoxid zu Ceroxid von 0,05 bis 0,5 auf.

In besonders bevorzugten Ausführungsformen der vorliegenden Erfindung umfasst Beschichtung Z Lanthanstabilisiertes Aluminiumoxid, sowie Platin, Palladium oder Platin und Palladium und zwei verschiedene, Zirkoniumoxid, Ceroxid, Lanthanoxid, sowie Yttriumoxid oder Praseodymoxid umfassende Sauerstoffspeicherkomponenten.

In besonders bevorzugten Ausführungsformen der vorliegenden Erfindung umfasst Beschichtung Y Lanthanstabilisiertes Aluminiumoxid, sowie Palladium, Rhodium oder Palladium und Rhodium und eine Zirkoniumoxid, Ceroxid, Lanthanoxid, sowie Yttriumoxid oder Praseodymoxid umfassende Sauerstoffspeicherkomponente.

Bevorzugt sind die Cer/Zirkonium/Seltenerdmetall-Mischoxide von Beschichtung Z bzw. Y zusätzlich zu Lanthanoxid mit einem zweiten Seltenerdmetall dotiert. Ein bevorzugtes Partikelfilter besitzt einen Gehalt des zweiten Seltenerdmetalls des jeweiligen Cer/Zirkonium/Seltenerdmetall-Mischoxids zwischen 2 % bis 25 % bezogen auf das Gewicht des jeweiligen Cer/Zirkonium/Seltenerdmetall-Mischoxids. Vorteilhafter ist, wenn der Gehalt des zweiten Seltenerdmetalls bei 3 % bis 20 %, ganz bevorzugt bei 4 % bis 15 % bezogen auf das Gewicht des jeweiligen Cer/Zirkonium/Seltenerdmetall-Mischoxids in den Beschichtungen Z bzw. Y liegt.

Bevorzugt ist das erste Cer/Zirkonium/Seltenerdmetall-Mischoxid von Beschichtung Z zusätzlich zu Lanthanoxid mit Yttriumoxid dotiert. Ein bevorzugtes Partikelfilter besitzt einen Yttriumoxidgehalt im ersten Cer/Zirkonium/Seltenerdmetall-Mischoxid von Beschichtung Z von 2 % bis 25 % bezogen auf das Gewicht des ersten Cer/Zirkonium/Seltenerdmetall-Mischoxids. Mehr bevorzugt liegt der Yttriumoxidgehalt des ersten Cer/Zirkonium/Seltenerdmetall-Mischoxids von Beschichtung Z zwischen 3 % bis 20 %, ganz bevorzugt bei 4 % bis 15 % bezogen auf das Gewicht des ersten Cer/Zirkonium/Seltenerdmetall-Mischoxids. Das Gewichtsverhältnis von Lanthanoxid zu Yttriumoxid beträgt insbesondere 0.1 bis 1, vorzugsweise 0.15 bis 0.8 und ganz bevorzugt 0.2 bis 0.5.

Ebenfalls vorteilhaft ist eine Ausführungsform, in der das zweite Cer/Zirkonium/Seltenerdmetall-Mischoxid von Beschichtung Z neben Lanthanoxid mit einem weiteren Metalloxid aus der Gruppe der Seltenerdmetalloxide dotiert ist, bevorzugt mit Praseodym. Ein bevorzugtes Partikelfilter besitzt einen Praseodymgehalt im zweiten Cer/Zirkonium/Seltenerdmetall-Mischoxids von Beschichtung Z von insbesondere 2 bis 10 Gew.-%, mehr bevorzugt 3 bis 9 Gew.-% und ganz bevorzugt 4 bis 8 Gew.-% bezogen auf das Gewicht des Cer/Zirkonium/Seltenerdmetall-Mischoxids. Das Gewichtsverhältnis von Lanthanoxid zu Praseodymoxid beträgt insbesondere 0,1 bis 2,0 vorzugsweise 0,2 bis 1,8 und ganz bevorzugt 0,5 bis 1,5.

In Ausführungsformen der vorliegenden Erfindung ist in Beschichtung Z der Zirkoniumoxidgehalt der yttriumoxidhaltigen Sauerstoffspeicher-komponente größer als der Zirkoniumoxid-Gehalt der praseodymoxidhaltigen Sauerstoffspeicherkomponente, jeweils bezogen auf die jeweilige Sauerstoffspeicherkomponente.

Bevorzugt ist das vorzugsweise eine Cer/Zirkonium/Seltenerdmetall-Mischoxid von Beschichtung Y zusätzlich zu Lanthanoxid mit Yttriumoxid dotiert. Ein bevorzugtes Partikelfilter besitzt einen Yttriumoxidgehalt im Cer/Zirkonium/Seltenerdmetall-Mischoxids von Beschichtung Y von 2 % bis 25 % bezogen auf das Gewicht des Cer/Zirkonium/Seltenerdmetall-Mischoxids von Beschichtung Y. Mehr bevorzugt liegt der Yttriumoxidgehalt des vorzugsweise einen Cer/Zirkonium/Seltenerdmetall-Mischoxids von Beschichtung Y zwischen 4 % bis 20 %, ganz bevorzugt bei 10 % bis 15 % bezogen auf das Gewicht des Cer/Zirkonium/Seltenerdmetall-Mischoxids. Das Gewichtsverhältnis von Lanthanoxid zu Yttriumoxid beträgt insbesondere 0.1 bis 1, vorzugsweise 0.15 bis 0.8 und ganz bevorzugt 0.2 bis 0.5.

In Ausführungsformen der vorliegenden Erfindung ist der Gehalt von Yttriumoxid in der ersten Sauerstoffspeicherkomponente der Beschichtung Z größer oder gleich dem Gehalt von Yttriumoxid in der Sauerstoffspeicher-komponente der Beschichtung Y, jeweils bezogen auf das Gewicht der jeweiligen Sauerstoffspeicherkomponente. In Ausführungsformen der vorliegenden Erfindung ist der Massenanteil von Yttriumoxid in der Beschichtung Y größer als in der Beschichtung Z.

In einer Ausführung des erfindungsgemäßen Partikelfilters enthalten die Beschichtungen Y und Z als katalytisch aktive Elemente Edelmetalle. Hierfür kommen insbesondere Platin, Palladium und Rhodium oder Mischungen derselben in Frage, wobei Palladium, Rhodium, Palladium und Rhodium, oder Platin, Palladium und Rhodium bevorzugt und Palladium und Rhodium besonders bevorzugt sind. Des Weiteren können alle Cer/Zirkonium/Seltenerdmetall-Mischoxide in Beschichtung Y und Z jeweils mit Palladium oder Rhodium, oder Palladium und Rhodium aktiviert sein. Ggf. kann Platin ebenfalls vorhanden sein.

Die Edelmetalle werden üblicherweise in Mengen von 0,15 g/l bis 5 g/l, bezogen auf das Volumen des Wandflussfilters, eingesetzt. In einer bevorzugten Ausführungsform befinden sich 100% des gesamten Rhodiumanteils in der Schicht Y und 30-100% des gesamten Palladiumanteils in der Schicht Z. In einer besonders bevorzugten Ausführungsform befinden sich 100% des gesamten Rhodiumanteils in der Schicht Y und 45-100% des gesamten Palladiumabteils in der Schicht Z.

Bevorzugt ist, dass sich die katalytisch aktiven Beschichtungen in den Poren der porösen Wand eines Wandflussfilters befinden. Nur geringe Teile können durch den Beschichtungsprozess bedingt auf der Wand vorliegen. Erfindungsgemäß sind die Beschichtung Z bzw. Y zu > 90%, mehr bevorzugt >95% in den Poren der Wand vorhanden. Eine Auswertung kann über eine computergestütztes Bildanalyse basierend auf SEM-Aufnahmen von Schliffen der beschichteten Wände erfolgen (DE102018111246). Dabei wurden entsprechende Aufnahmen des Schliffes eines Einlass- und Auslasskanals erstellt. In dieser Art der Analyse wird die durchschnittliche Farbe der Wandoberfläche des nicht mit einer Beschichtung versehenen Kanals als Referenz bestimmt. Diese Referenz wird von der entsprechenden Aufnahme der mit der Beschichtung versehenen Bereiche abgezogen, wobei der Farbabstand nach CIE76 der International Commission on Illumination mit einem geringsten noch unterscheidbaren Farbabstand von 2,33 festgelegt wurde (https://en.wikipedia.org/wiki/Color_difference#CIE76).

Als Trägermaterialien für die Edelmetalle kommen alle dem Fachmann für diesen Zweck geläufigen Materialien in Betracht. Solche Materialien sind insbesondere Metalloxide mit einer BET-Oberfläche von 30 bis 250 $m^2$/g, bevorzugt von 100 bis 200 $m^2$/g (bestimmt nach DIN 66132 - neueste Fassung am Anmeldetag).

Besonders geeignete Trägermaterialien für die Edelmetalle sind ausgewählt aus der Reihe bestehend aus Aluminiumoxid, dotiertes Aluminiumoxid, Siliziumoxid, Titandioxid und Mischoxiden aus einem oder mehreren davon. Dotierte Aluminiumoxide sind beispielsweise mit Lanthanoxid-, Bariumoxid-, Zirkoniumoxid-, Siliziumdioxid- und/oder Titanoxid-dotierte Aluminiumoxide. Mit Vorteil wird Lanthan-stabilisiertes Aluminiumoxid eingesetzt, wobei Lanthan in Mengen von 1 bis 10 Gew.-%, bevorzugt 3 bis 6 Gew.-%, jeweils berechnet als $La_2O_3$ und bezogen auf das Gewicht des stabilisierten Aluminiumoxides, verwendet wird.

Üblicherweise enthält die Beschichtung Z Sauerstoffspeicherkomponenten in Mengen von 10 bis 85 g/l, bezogen auf das Volumen des Wandflussfilters. Üblicherweise enthält die Beschichtung Y Sauerstoffspeicherkomponenten in Mengen von 10 bis 75 g/l, bezogen auf das Volumen des Wandflussfilters. Das Masseverhältnis von Trägermaterialien und Sauerstoffspeicherkomponenten in Beschichtung Z beträgt üblicherweise 0,2 bis 1,5, beispielsweise 0,3 bis 0,8. Das Masseverhältnis von Trägermaterialien und Sauerstoffspeicherkomponenten in Beschichtung Y beträgt üblicherweise 0,2 bis 1,5, beispielsweise 0,3 bis 0,8.

In Ausführungsformen der vorliegenden Erfindung enthält Beschichtung Z eine oder mehrere Erdalkaliverbindungen wie z. B. Strontiumoxid, Bariumoxid oder Bariumsulfat. Die Menge an Bariumsulfat je Beschichtung beträgt insbesondere 1 bis 15 g/l, bevorzugt 5 bis 10 g/l Volumen des Wandflussfilters. Insbesondere enthält Beschichtung Z Strontiumoxid oder Bariumoxid. In einer besonders bevorzugten Ausführungsform enthält die Beschichtung Y keine Erdalkaliverbindungen wie z. B. Strontiumoxid, Bariumoxid oder Bariumsulfat, insbesondere keine Bariumverbindungen.

In weiteren Ausführungsformen der vorliegenden Erfindung enthalten die Beschichtungen Y und Z Additive wie Seltenerdverbindungen wie z. B. Stabilisatoren wie Lanthanoxid und/oder Binder wie z. B. Aluminiumverbindungen. Diese Additive werden in Mengen verwendet, die in weiten Grenzen variieren können und die der Fachmann im konkreten Fall mit einfachen Mitteln bestimmen kann.

Gemäß der vorliegenden Erfindung erstreckt sich die Beschichtung Z ausgehend vom ersten Ende des Wandflussfilters über die gesamte Länge L des Wandflussfilters. Die Beladung des Wandflussfilters mit Beschichtung Z beträgt bevorzugt 20 bis 120 g/l, bezogen auf das Volumen des Wandflussfilters.

Gemäß der vorliegenden Erfindung erstreckt sich die Beschichtung Y ausgehend vom zweiten Ende des Wandflussfilters über die gesamte Länge L des Wandflussfilters. Die Beladung des Wandflussfilters mit Beschichtung Z beträgt bevorzugt 20 bis 120 g/l, bezogen auf das Volumen des Wandflussfilters. Die Gesamtwashcoatbeladung des erfindungsgemäßen Partikelfilters beträgt insbesondere 40 bis 150 g/l, bezogen auf das Volumen des Wandflussfilters.

In einer bevorzugten Ausführungsform des erfindungsgemäßen Partikelfilters liegt das Verhältnis der aufgebrachten Menge von Beschichtung Z zu der aufgebrachten Menge von Beschichtung Y im Bereich von 3:1 bis 1:3, bevorzugt 2:1 bis 1:2. In Ausführungsformen der vorliegenden Erfindung enthalten weder Beschichtung Z noch Beschichtung Y einen Zeolithen oder ein Molsieb.

Ein nicht erfindungsgemäßer Partikelfilter zur Entfernung von Partikeln, Kohlenmonoxid, Kohlenwasserstoffen und Stickoxiden aus dem Abgas von mit stöchiometrischem Luft/Kraftstoffgemisch betriebenen Verbrennungsmotoren, das ein Wandflussfilter der Länge L und zwei verschiedene Beschichtungen Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen OE bzw. OA bilden und wobei die Kanäle E am zweiten Ende und die Kanäle A am ersten Ende verschlossen sind, und bei dem sich die beiden Beschichtungen Y und Z in den porösen Wänden befinden und sich ausgehend vom ersten Ende des Wandflussfilters über die gesamte Länge L erstrecken und beide aktives Aluminiumoxid, mindestens ein Cer/Zirkonium/Seltenerdmetall-Mischoxid und mindestens ein Platingruppenmetall aufweisen, wobei Schicht Z frei von Rhodium ist, und dass das Verhältnis der aufgebrachten Menge von Beschichtung Z zu der aufgebrachten Menge von Beschichtung Y im Bereich von 3:1 bis 1:3 liegt. Es sei erwähnt, dass sich die bevorzugten Ausführungsformen, welche weiter vorne genannt sind mutatis mutandis auch auf die hier genannte Ausführungsform beziehen.

Wandflussfilter, die gemäß vorliegender Erfindung verwendet werden können, sind bekannt und am Markt erhältlich. Sie bestehen beispielsweise aus Siliciumcarbid, Aluminiumtitanat oder Cordierit, haben beispielsweise eine Zelligkeit von 200 bis 400 Zellen pro Quadratzoll (cpsi), d. h. etwa 30 bis 60 Zellen pro $cm^2$, und üblicherweise eine Wandstärke zwischen 6 und 12 mil, bzw. 0,1524 und 0,305 mm.

Sie weisen in unbeschichtetem Zustand beispielsweise Porositäten von 50 bis 80 %, insbesondere 55 bis 75% auf. Ihre durchschnittliche Porengröße beträgt in unbeschichtetem Zustand beispielsweise 10 bis 25 Mikrometer.

In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Die Herstellung des erfindungsgemäßen Partikelfilters kann nach dem Fachmann geläufigen Methoden erfolgen, so etwa dadurch, dass eine Beschichtungssuspension, die üblicherweise Washcoat genannt wird, mittels eines der üblichen Tauchbeschichtungsverfahren bzw. Pump- und Saug-Beschichtungsverfahren auf das Wandflussfilter aufgebracht wird. Thermische Nachbehandlung bzw. Kalzination schließen sich üblicherweise an.

Dem Fachmann ist bekannt, dass die durchschnittliche Porengröße des Wandflussfilters und die mittlere Teilchengröße der katalytisch aktiven Materialien aufeinander abgestimmt werden müssen, um eine auf-Wand-Beschichtung oder eine in-Wand-Beschichtung zu erzielen. Im Fall der in-Wand-Beschichtung muss die mittlere Teilchengröße der katalytisch aktiven Materialien klein genug sein, um in die Poren des Wandflussfilters einzudringen. Dagegen muss im Fall der auf-Wand-Beschichtung die mittlere Teilchengröße der katalytisch aktiven Materialien groß genug sein, um nicht in die Poren des Wandflussfilters einzudringen.

In Ausführungsformen der vorliegenden Erfindung werden die Beschichtungssuspensionen zur Herstellung der Beschichtungen Y und Z vorzugsweise bis zu einer Partikelgrößenverteilung von $d_{50}$ zwischen 1 bis 2 $\mu$m und $d_{99}$ zwischen 6 bis 7 $\mu$m gemahlen (Q3-Verteilung; DIN 66161 - neueste Fassung am Anmeldetag).

Das erfindungsgemäße Partikelfilter eignet sich hervorragend zur Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren.

Die vorliegende Erfindung betrifft somit auch ein Verfahren zur Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren, das dadurch gekennzeichnet ist, dass das Abgas über ein erfindungsgemäßes Partikelfilter geleitet wird.

Dabei kann das Abgas so über ein erfindungsgemäßes Partikelfilter geleitet werden, dass es durch die Kanäle E in das Partikelfilter eintritt und es durch Kanäle A wieder verlässt.

Es ist aber auch möglich, dass das Abgas durch die Kanäle A in das Partikelfilter eintritt und es durch Kanäle E wieder verlässt. In einer besonders bevorzugten Ausführungsform wird die Beschichtung Z zuerst vom Abgas kontaktiert, bildet also die Beschichtung in den Einlasskanälen.

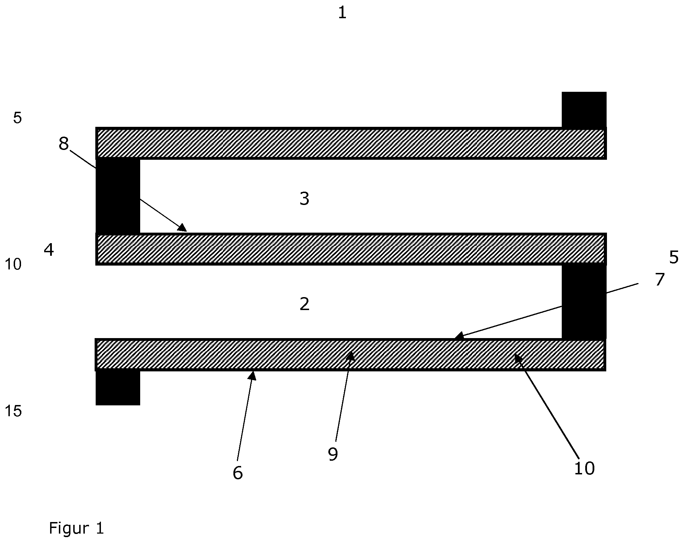

Figur 1 zeigt ein Partikelfilter das ein Wandflussfilter der Länge L (1) und zwei verschiedene Beschichtungen Y und Z umfasst, wobei das Wandflussfilter Kanäle E (2) und A (3) umfasst, die sich parallel zwischen einem ersten (4) und einem zweiten Ende (5) des Wandflussfilters erstrecken und die durch poröse Wände (6) getrennt sind, die Oberflächen $O_E$ (7) bzw. $O_A$ (8) bilden und wobei die Kanäle E am zweiten Ende und die Kanäle A am ersten Ende verschlossen sind, dadurch gekennzeichnet, dass sich die beiden Beschichtungen Y (9) und Z (10) in den porösen Wänden befinden und sich ausgehend vom ersten Ende des Wandflussfilters über die gesamte Länge L erstrecken.

Die Erfindung wird in den nachstehenden Beispielen näher erläutert.

Beispiele:

Jeweils 5 Filter wurden mit verschiedenen katalytisch aktiven Beschichtungen versehen. Als Filtersubstrate wurden jeweils keramische Wandflussfilter aus hochporösem Cordierit mit einem Durchmesser von 11,84 cm und einer Länge von 15,24 cm sowie einer Zelligkeit von 300 cpsi (46,5 Zellen pro cm$^2$) und einer Wandstärke von 8,5 mil, also 0,02 mm verwendet. Jedes Filter wurde mit einer Beschichtung von 100 g/l bezogen auf das Filtervolumen versehen.

Vergleichsbeispiel 1:

Mit Lanthanoxid stabilisiertes Aluminiumoxid wurde zusammen mit einer ersten Sauerstoffspeicherkomponente, die 40 Gew.-% Ceroxid, 50 Gew.-% Zirkoniumoxid, 5 Gew.-% Lanthanoxid und 5 Gew.-% Praseodymoxid umfasste, und einer zweiten Sauerstoffspeicherkomponente, die 24 Gew.-% Ceroxid, 60 Gew.-% Zirkoniumoxid, 3,5 Gew.-% Lanthanoxid und 12,5 Gew.-% Yttriumoxid umfasste, in Wasser suspendiert. Beide Sauerstoffspeicherkomponenten wurden zu gleichen Teilen eingesetzt. Das Gewichtsverhältnis von Aluminiumoxid zu Sauerstoffspeicherkomponenten betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand von beiden Richtungen (Outlet und Inlet) eingebracht wurde. Die Gesamtbeladung dieses Filters betrug 100 g/l, die Edelmetallbeladung 1,589 g/l mit einem Verhältnis von Palladium zu Rhodium von 3,5 : 1. Das so erhaltene beschichtete Filter wurde getrocknet und anschließend kalziniert.

Vergleichsbeispiel 2:

In Ausführungsformen der vorliegenden Erfindung sind zwei verschiedene Beschichtungen Y und Z über jeweils 60% der Substratlänge in die poröse Filterwand eingebracht. Zunächst wurde mit Lanthanoxid stabilisiertes Aluminiumoxid zusammen mit einer ersten Sauerstoffspeicherkomponente, die 40 Gew.-% Ceroxid, 50 Gew.-% Zirkoniumoxid, 5 Gew.-% Lanthanoxid und 5 Gew.-% Praseodymoxid umfasste, und einer zweiten Sauerstoffspeicherkomponente, die 24 Gew.-% Ceroxid, 60 Gew.-% Zirkoniumoxid, 3,5 Gew.-% Lanthanoxid und 12,5 Gew.-% Yttriumoxid umfasste, in Wasser suspendiert. Beide Sauerstoffspeicherkomponenten wurden zu gleichen Teilen eingesetzt. Das Gewichtsverhältnis von Aluminiumoxid zu Sauerstoffspeicherkomponenten betrug 30:70. Die so erhaltene Suspension wurde anschließend unter ständigem Rühren mit einer Palladiumnitrat-Lösung versetzt. Die resultierende Beschichtungssuspension Z wurde direkt zur Beschichtung eines handelsüblichen Wandflussfiltersubstrats eingesetzt, wobei die Beschichtung über 60% der Substratlänge vom Einlasskanal ausgehend in die poröse Filterwand erfolgte. Die Beladung von Beschichtung Z betrug 50 g/l. Das so erhaltene beschichtete Filter wurde getrocknet und anschließend kalziniert.

In der Beschichtung Y wurde Lanthanoxid stabilisiertes Aluminiumoxid wurde zusammen mit einer ersten Sauerstoffspeicherkomponente, die 24 Gew.-% Ceroxid, 60 Gew.-% Zirkoniumoxid, 3,5 Gew.-% Lanthanoxid und 12,5 Gew.-% Yttriumoxid umfasste, in Wasser suspendiert. Das Gewichtsverhältnis von Aluminiumoxid zu Sauerstoffspeicherkomponenten betrug 55:45. Die so erhaltene Suspension wurde anschließend unter ständigem Rühren mit einer Rhodiumnitrat-Lösung versetzt. Die resultierende Beschichtungssuspension wurde auf ein bereits Beschichtung Z enthaltendes handelsübliches Wandflussfiltersubstrat beschichtet, wobei die Beschichtung über 60% der Substratlänge ausgehend vom Auslasskanal in die poröse Filterwand eingebracht wurde. Die Beladung von Beschichtung Y betrug 50 g/l. Die Gesamtbeladung dieses Filters betrug 100 g/l, die Edelmetallbeladung 1,589 g/l mit einem Verhältnis von Palladium zu Rhodium von 3,5 : 1. Das so erhaltene beschichtete Filter wurde getrocknet und anschließend kalziniert.

Erfindungsgemäßes Beispiel 1:

In Ausführungsformen der vorliegenden Erfindung sind zwei verschiedene Beschichtungen Y und Z über 100% der Substratlänge in die poröse Filterwand eingebracht. Zunächst wurde mit Lanthanoxid stabilisiertes Aluminiumoxid wurde zusammen mit einer ersten Sauerstoffspeicherkomponente, die 40 Gew.-% Ceroxid, 50 Gew.-% Zirkoniumoxid, 5 Gew.-% Lanthanoxid und 5 Gew.-% Praseodymoxid umfasste, und einer zweiten Sauerstoffspeicherkomponente, die 24 Gew.-% Ceroxid, 60 Gew.-% Zirkoniumoxid, 3,5 Gew.-% Lanthanoxid und 12,5 Gew.-% Yttriumoxid umfasste, in Wasser suspendiert. Beide Sauerstoffspeicherkomponenten wurden zu gleichen Teilen eingesetzt. Das Gewichtsverhältnis von Aluminiumoxid zu Sauerstoffspeicherkomponenten betrug 30:70. Die so erhaltene Suspension wurde anschließend unter ständigem Rühren mit einer Palladiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand erfolgte. Die Beladung von Beschichtung Z betrug 50 g/l. Das so erhaltene beschichtete Filter wurde getrocknet und anschließend kalziniert.

In der Beschichtung Y wurde Lanthanoxid stabilisiertes Aluminiumoxid wurde zusammen mit einer ersten Sauerstoffspeicherkomponente, die 24 Gew.-% Ceroxid, 60 Gew.-% Zirkoniumoxid, 3,5 Gew.-% Lanthanoxid und 12,5 Gew.-% Yttriumoxid umfasste, in Wasser suspendiert. Das Gewichtsverhältnis von Aluminiumoxid zu Sauerstoffspeicherkomponenten betrug 55:45. Die so erhaltene Suspension wurde anschließend unter ständigem Rühren mit einer Rhodiumnitrat-Lösung versetzt. Die resultierende Beschichtungssuspension wurde auf ein bereits Beschichtung Z enthaltendes handelsübliches Wandflussfiltersubstrat beschichtet, wobei die Beschichtung über 100% der Substratlänge in die poröse Filterwand eingebracht wurde. Die Beladung von Beschichtung Y betrug 50 g/l. Die Gesamtbeladung dieses Filters betrug 100 g/l, die Edelmetallbeladung 1,589 g/l mit einem Verhältnis von Palladium zu Rhodium von 3,5 : 1. Das so erhaltene beschichtete Filter wurde getrocknet und anschließend kalziniert.

Das erfindungsgemäße Beispiel 1 und Vergleichsbeispiel 1 zeigen ähnliche Staudrücke, während das Vergleichsbeispiel 2 ein höherer Staudruck besonders bei 600 m³/h zeigt.

Tabelle 1: Staudruck gemessen bei 300m³/h und 600³m/h.

|  | 300 m³/h | 600 m³/h |
|---|---|---|
| Vergleichsbeispiel 1 | 11 mbar $\pm$ 0,3 mbar | 35,5 mbar $\pm$ 0,3 mbar |
| Vergleichsbeispiel 2 | 12,4 mbar $\pm$ 0,4 mbar | 38,0 mbar $\pm$ 0,5 mbar |
| Beispiel 1 | 11,0 mbar $\pm$ 0,5 mbar | 36 mbar $\pm$ 0,6 mbar |

Zur Bestimmung der katalytischen Eigenschaften des erfindungsgemäßen Filters wurden jeweils ein Filter von Vergleichsbeispiel 1 und Beispiel 1 in einer Motorprüfstandsalterung gealtert. Die Alterung besteht aus einer Schubabschaltungsalterung mit 950°C Abgastemperatur vor Katalysatoreingang (Maximale Betttemperatur 1030°C). Die Alterungszeit betrug 38 Stunden.

Anschließend wurden an einem Motorprüfstand das Anspringverhalten bei konstanter mittlerer Luftzahl $\lambda$ und die dynamische Umsetzung bei Änderung von $\lambda$ geprüft.

Tabelle 2 enthält die Temperaturen $T_{50}$, bei denen jeweils 50% der betrachteten Komponente umgesetzt werden. Dabei wurde das Anspringverhalten bei stöchiometrischer Abgaszusammensetzung ($\lambda$ = 0,999 mit $\pm$3,4% Amplitude) bestimmt.

Tabelle 2: Ergebnisse des Anspringverhaltens nach Alterung für Beispiel 1 und Vergleichsbeispiele 1 und 2

|  | $T_{50}$ HC stöch | $T_{50}$ CO stöch | $T_{50}$ NOx stöch |
|---|---|---|---|
| Vergleichsbeispiel 1 | 385 | 391 | 392 |
| Vergleichsbeispiel 2 | 363 | 373 | 366 |
| Beispiel 1 | 355 | 359 | 356 |

Das erfindungsgemäße Beispiel 1 zeigt eine deutliche Verbesserung in der Temperaturen $T_{50}$, um 30°C für alle betrachtete Komponente (HC, CO und NOx).

Des Weiteren wurden die Filter einem sogenannten Amplitudentest unterzogen, der eine Aussage über die dynamische Sauerstoffspeicherfähigkeit gibt. Hierbei wird das Lambda mit drei verschiedenen Amplituden von 2, 3,4 und 6,8% beaufschlagt und die jeweilige Dämpfung durch den Katalysator bestimmt. Tabelle 2 zeigt das Dämpfungsverhalten der drei Beispiele.

Tabelle 3: Ergebnisse des Amplitudentests nach Alterung für Beispiel 1 und Vergleichsbeispiele 1 und 2

|  | 2% | 3,4% | 6,8% |
|---|---|---|---|
| Vergleichsbeispiel 1 | 0,10 | 0,11 | 0,19 |
| Vergleichsbeispiel 2 | 0,18 | 0,14 | 0,12 |
| Beispiel 1 | 0,07 | 0,07 | 0,08 |

Das erfindungsgemäße Beispiel 1 zeigt eine deutlich stärkere Dämpfung der Lambda-Amplitude und somit eine höhere dynamische Sauerstoffspeicherfähigkeit als die beiden Vergleichsbeispiele 1 und 2.

**Patentansprüche**

1. Partikelfilter zur Entfernung von Partikeln, Kohlenmonoxid, Kohlenwasserstoffen und Stickoxiden aus dem Abgas von mit stöchiometrischem Luft/Kraftstoffgemisch betriebenen Verbrennungsmotoren, das ein Wandflussfilter der Länge L und zwei verschiedene Beschichtungen Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen OE bzw. OA bilden und wobei die Kanäle E am zweiten Ende und die Kanäle A am ersten Ende verschlossen sind,
**dadurch gekennzeichnet, dass**
sich die beiden Beschichtungen Y und Z in den porösen Wänden befinden und sich ausgehend vom ersten Ende des Wandflussfilters über die gesamte Länge L erstrecken, dabei eine der Beschichtungen zuerst in die Poren der Filterwand des Substrats eingebracht wird, bevor im Anschluss die andere Beschichtung in entgegengesetzter Beschichtungsrichtung in die Filterwand des Substrats eingebracht wird, und beide aktives Aluminiumoxid, eine Sauerstoffspeicherkomponente und mindestens ein Platingruppenmetall aufweisen, und wobei Beschichtung Z als Sauerstoffspeicherkomponente zwei unterschiedliche Cer/Zirkonium/Seltenerdmetall-Mischoxide umfasst, und das Gewichtsverhältnis von aktivem Aluminiumoxid zur Summe der beiden Cer/Zirkonium/Seltenerdmetall-Mischoxide im Bereich von 10:90 bis 60:40 liegt.

2. Partikelfilter gemäß einem der vorhergehenden Ansprüche,
**dadurch gekennzeichnet, dass**
in Beschichtung Z das Gewichtsverhältnis vom einen Cer/Zirkonium/Seltenerdmetall-Mischoxid zum anderen Cer/Zirkonium/Seltenerdmetall-Mischoxid im Bereich von 4:1 bis 1:4 liegt.

3. Partikelfilter gemäß einem der vorhergehenden Ansprüche,
**dadurch gekennzeichnet, dass**
in Beschichtung Z das eine Cer/Zirkonium/Seltenerdmetall-Mischoxid einen höheren Gehalt an Zirkoniumoxid aufweist als das andere Cer/Zirkonium/Seltenerdmetall-Mischoxid.

4. Partikelfilter gemäß einem der vorhergehenden Ansprüche,
**dadurch gekennzeichnet, dass**
in Beschichtung Z das eine Cer/Zirkonium/Seltenerdmetall-Mischoxid einen geringeren Gehalt an Ceroxid aufweist als das andere Cer/Zirkonium/Seltenerdmetall-Mischoxid.

5. Partikelfilter gemäß einem der vorhergehenden Ansprüche,
**dadurch gekennzeichnet, dass**
in Beschichtung Y das Gewichtsverhältnis von aktivem Aluminiumoxid zum Cer/Zirkonium/Seltenerdmetall-Mischoxid als Sauerstoffspeicherkomponente im Bereich von 25:75 bis 75:25 liegt.

6. Partikelfilter gemäß einem der vorhergehenden Ansprüche,
**dadurch gekennzeichnet, dass**
das eine Cer/Zirkonium/Seltenerdmetall-Mischoxid von Beschichtung Z ein Gewichtsverhältnis von Ceroxid zu Zirkoniumoxid von 0,1 bis 0,7 aufweist, welches kleiner ist als im anderen Cer/Zirkonium/Seltenerdmetall-Mischoxid, das ein Gewichtsverhältnis von Ceroxid zu Zirkoniumoxid von 0,5 bis 1,5 aufweist.

7. Partikelfilter gemäß einem der vorhergehenden Ansprüche,
**dadurch gekennzeichnet, dass**
das Cer/Zirkonium/Seltenerdmetall-Mischoxid von Beschichtung Y ein Gewichtsverhältnis von Ceroxid zu Zirkoniumoxid von 0,1 bis 0,7 aufweist.

8. Partikelfilter gemäß einem der vorhergehenden Ansprüche,
**dadurch gekennzeichnet, dass**
sämtliche verwendeten Cer/Zirkonium/Seltenerdmetall-Mischoxide mit Lanthanoxid dotiert sind.

9. Partikelfilter gemäß einem der vorhergehenden Ansprüche,
**dadurch gekennzeichnet, dass**
das erste Cer/Zirkonium/Seltenerdmetall-Mischoxid von Beschichtung Z zusätzlich zu Lanthanoxid mit 2 % bis 25 % Yttriumoxid bezogen auf das Gewicht des ersten Cer/Zirkonium/Seltenerdmetall-Mischoxids dotiert ist.

**10.** Partikelfilter gemäß einem der vorhergehenden Ansprüche,
**dadurch gekennzeichnet, dass**
das zweite Cer/Zirkonium/Seltenerdmetall-Mischoxid von Beschichtung Z zusätzlich zu Lanthanoxid mit 2 % bis 10 % Praseodymoxid bezogen auf das Gewicht des zweiten Cer/Zirkonium/Seltenerdmetall-Mischoxids dotiert ist.

**11.** Partikelfilter gemäß einem der vorhergehenden Ansprüche,
**dadurch gekennzeichnet, dass**
das Cer/Zirkonium/Seltenerdmetall-Mischoxid von Beschichtung Y zusätzlich zu Lanthanoxid mit 2 % bis 25 % Yttriumoxid bezogen auf das Gewicht des ersten Cer/Zirkonium/Seltenerdmetall-Mischoxids Yttriumoxid dotiert ist.

**12.** Partikelfilter gemäß Anspruch 11,
**dadurch gekennzeichnet, dass**
der Massenanteil von Yttriumoxid in der Beschichtung Y größer als in der Beschichtung Z ist.

**13.** Partikelfilter gemäß einem der vorhergehenden Ansprüche,
**dadurch gekennzeichnet, dass**
sämtliche Cer/Zirkonium/Seltenerdmetall-Mischoxide der Beschichtung Z mit Palladium, Platin oder Palladium und Platin aktiviert sind.

**14.** Partikelfilter gemäß einem der vorhergehenden Ansprüche 1 - 12,
**dadurch gekennzeichnet, dass**
die Cer/Zirkon/Seltenerdmetall-Mischoxide der Beschichtung Y und Z jeweils mit Palladium oder Rhodium, oder Palladium und Rhodium aktiviert sind.

**15.** Partikelfilter gemäß einem der vorhergehenden Ansprüche,
**dadurch gekennzeichnet, dass** das Verhältnis der aufgebrachten Menge von Beschichtung Z zu der aufgebrachten Menge von Beschichtung Y im Bereich von 3:1 bis 1:3 liegt.

**16.** Verfahren zur Entfernung von Partikeln, Kohlenmonoxid, Kohlenwasserstoffen und Stickoxiden aus dem Abgas von mit stöchiometrischem Luft/KraftstoffGemisch betriebenen Verbrennungsmotoren, das **dadurch gekennzeichnet ist, dass** das Abgas über ein Partikelfilter gemäß den Ansprüchen 1 - 15 geleitet wird.

**Claims**

**1.** Particulate filter for removing particles, carbon monoxide, hydrocarbons, and nitrogen oxides out of the exhaust gas of combustion engines operated with a stoichiometric air/fuel mixture, comprising a wall-flow filter of length L and two different coatings Y and Z, wherein the wall-flow filter comprises channels E and A which extend in parallel between a first and a second end of the wall-flow filter and are separated by porous walls which form surfaces OE or OA, and wherein the channels E are closed at the second end and the channels A are closed at the first end,
**characterized in that**
the two coatings Y and Z are located in the porous walls and extend starting from the first end of the wall flow filter over the entire length L, with one of the coatings being first introduced into the pores of the filter wall of the substrate before the other coating is subsequently introduced in the opposite coating direction into the filter wall of the substrate, and both have active alumina, an oxygen storage component and at least one platinum group metal, and wherein coating Z comprises two different cerium/zirconium/rare earth metal mixed oxides as oxygen storage component, and the weight ratio of active alumina to the sum of the two cerium/zirconium/rare earth metal mixed oxides is in the range from 10:90 to 60:40.

**2.** Particulate filter according to one of the preceding claims,
**characterized in that**
in coating Z, the weight ratio of the one cerium/zirconium/rare earth metal mixed oxide to the other cerium/zirconium/rare earth metal mixed oxide is in the range from 4:1 to 1:4.

**3.** Particulate filter according to one of the preceding claims,
**characterized in that**
in coating Z, the one cerium/zirconium/rare earth metal mixed oxide has a higher zirconium oxide content than the other cerium/zirconium/rare earth metal mixed oxide.

4. Particulate filter according to one of the preceding claims, **characterized in that** in coating Z, the one cerium/zirconium/rare earth metal mixed oxide has a lower cerium oxide content than the other cerium/zirconium/rare earth metal mixed oxide.

5. Particulate filter according to one of the preceding claims, **characterized in that** in coating Y, the weight ratio of active alumina to the cerium/zirconium/rare earth metal mixed oxide as the oxygen storage component is in the range from 25:75 to 75:25.

6. Particulate filter according to one of the preceding claims, **characterized in that** the one cerium/zirconium/rare earth metal mixed oxide of coating Z has a cerium oxide to zirconium oxide weight ratio of 0.1 to 0.7, which is smaller than in the other cerium/zirconium/rare earth metal mixed oxide, which has a cerium oxide to zirconium oxide weight ratio of 0.5 to 1.5.

7. Particulate filter according to one of the preceding claims, **characterized in that** the cerium/zirconium/rare earth metal mixed oxide of coating Y has a cerium oxide to zirconium oxide weight ratio of 0.1 to 0.7.

8. Particulate filter according to one of the preceding claims, **characterized in that** all cerium/zirconium/rare earth metal mixed oxides used are doped with lanthanum oxide.

9. Particulate filter according to one of the preceding claims, **characterized in that** in addition to lanthanum oxide, the first cerium/zirconium/rare earth metal mixed oxide of coating Z is doped with 2% to 25% yttrium oxide based on the weight of the first cerium/zirconium/rare earth metal mixed oxide.

10. Particulate filter according to one of the preceding claims, **characterized in that** in addition to lanthanum oxide, the second cerium/zirconium/rare earth metal mixed oxide of coating Z is doped with 2% to 10% praseodymium oxide based on the weight of the second cerium/zirconium/rare earth metal mixed oxide.

11. Particulate filter according to one of the preceding claims, **characterized in that** in addition to lanthanum oxide, the cerium/zirconium/rare earth metal mixed oxide of coating Y is doped with 2% to 25% yttrium oxide based on the weight of the first cerium/zirconium/rare earth metal mixed oxide yttrium oxide.

12. Particulate filter according to claim 11, **characterized in that** the mass fraction of yttrium oxide is greater in the coating Y than in the coating Z.

13. Particulate filter according to one of the preceding claims, **characterized in that** all cerium/zirconium/rare earth metal mixed oxides of coating Z are activated with palladium, platinum, or palladium and platinum.

14. Particulate filter according to one of the preceding claims 1 - 12, **characterized in that** the cerium/zirconium/rare earth metal mixed oxides of the coating Y and Z are each activated with palladium or rhodium, or palladium and rhodium.

15. Particulate filter according to one of the preceding claims, **characterized in that** the ratio of the applied quantity of coating Z to the applied quantity of coating Y is in the range from 3:1 to 1:3.

16. Method for removing particles, carbon monoxide, hydrocarbons and nitrogen oxides out of the exhaust gas of combustion engines operated with a stoichiometric air/fuel mixture, **characterized in that** the exhaust gas is passed over a particulate filter according to claims 1 - 15.

**Revendications**

1. Filtre à particules pour l'élimination de particules, de monoxyde de carbone, d'hydrocarbures et d'oxydes d'azote du gaz d'échappement de moteurs à combustion fonctionnant avec un mélange stœchiométrique d'air et de carburant, lequel comprend un filtre à parois filtrantes de longueur L et deux revêtements différents Y et Z, le filtre à parois filtrantes comprenant des canaux E et A qui s'étendent en parallèle entre une première et une deuxième extrémité du filtre à parois filtrantes et qui sont séparés par des parois poreuses, qui forment des surfaces OE ou OA et les canaux E étant fermés au niveau de la deuxième extrémité et les canaux A étant fermés au niveau de la première extrémité,
**caractérisé en ce que**
les deux revêtements Y et Z se trouvent dans les parois poreuses et s'étendent à partir de la première extrémité du filtre à parois filtrantes sur toute la longueur L, un des revêtements est introduit d'abord dans les pores de la paroi de filtre du substrat, avant qu'à la suite, l'autre revêtement est introduit dans la direction de revêtement opposée dans la paroi de filtre du substrat, et les deux présentent de l'oxyde d'aluminium actif, un composant de stockage d'oxygène et au moins un métal du groupe du platine, et le revêtement Z comprenant comme composant de stockage d'oxygène deux différents oxydes mixtes de cérium/zirconium/métal de terres rares et le rapport pondéral d'oxyde d'aluminium actif à la somme des deux oxydes mixtes de cérium/zirconium/métal de terres rares étant situé dans la plage allant de 10:90 à 60:40.

2. Filtre à particules selon l'une quelconque des revendications précédentes, **caractérisé en ce que** dans le revêtement Z, le rapport pondéral d'un oxyde mixte de cérium/zirconium/métal de terres rares à l'autre oxyde mixte de cérium/zirconium/métal de terres rares se situe dans la plage allant de 4:1 à 1:4.

3. Filtre à particules selon l'une quelconque des revendications précédentes, **caractérisé en ce que** dans le revêtement Z, l'un oxyde mixte de cérium/zirconium/métal de terres rares présente une teneur en oxyde de zirconium plus élevée que l'autre oxyde mixte de cérium/zirconium/métal de terres rares.

4. Filtre à particules selon l'une quelconque des revendications précédentes, **caractérisé en ce que** dans le revêtement Z, l'un oxyde mixte de cérium/zirconium/métal de terres rares présente une teneur en oxyde de cérium plus faible que l'autre oxyde mixte de cérium/zirconium/métal de terres rares.

5. Filtre à particules selon l'une quelconque des revendications précédentes, **caractérisé en ce que** dans le revêtement Y, le rapport pondéral de l'oxyde d'aluminium actif à l'oxyde mixte de cérium/zirconium/métal de terres rares comme composant de stockage d'oxygène se situe dans la plage allant de 25:75 à 75:25.

6. Filtre à particules selon l'une quelconque des revendications précédentes, **caractérisé en ce que** l'un oxyde mixte de cérium/zirconium/métal de terres rares du revêtement Z présente un rapport pondéral de l'oxyde de cérium à l'oxyde de zirconium allant de 0,1 à 0,7, lequel est plus faible que celui dans l'autre oxyde mixte de cérium/zirconium/métal de terres rares, qui présente un rapport pondéral de l'oxyde de cérium à l'oxyde de zirconium allant de 0,5 à 1,5.

7. Filtre à particules selon l'une quelconque des revendications précédentes, **caractérisé en ce que** l'oxyde mixte de cérium/zirconium/métal de terres rares du revêtement Y présente un rapport pondéral de l'oxyde de cérium à l'oxyde de zirconium allant de 0,1 à 0,7.

8. Filtre à particules selon l'une quelconque des revendications précédentes, **caractérisé en ce que** tous les oxydes mixtes de cérium/zirconium/métal de terres rares sont dopés avec de l'oxyde de lanthane.

9. Filtre à particules selon l'une quelconque des revendications précédentes, **caractérisé en ce que** le premier oxyde mixte de cérium/zirconium/métal de terres rares du revêtement Z est dopé avec, en plus de l'oxyde de lanthane, 2 % à 25 % d'oxyde d'yttrium sur la base du poids du premier oxyde mixte de cérium/zirconium/métal de terres rares.

10. Filtre à particules selon l'une quelconque des revendications précédentes, **caractérisé en ce que**

le deuxième oxyde mixte de cérium/zirconium/métal de terres rares du revêtement Z est dopé avec, en plus de l'oxyde de lanthane, 2 % à 10 % d'oxyde de praséodyme sur la base du poids du deuxième oxyde mixte de cérium/zirconium/métal de terres rares.

11. Filtre à particules selon l'une quelconque des revendications précédentes, **caractérisé en ce que** l'oxyde mixte de cérium/zirconium/métal de terres rares du revêtement Y est dopé avec, en plus de l'oxyde de lanthane, 2 % à 25 % d'oxyde d'yttrium sur la base du poids de l'oxyde d'yttrium du premier oxyde mixte de cérium/zirconium/métal de terres rares.

12. Filtre à particules selon la revendication 11,
**caractérisé en ce que**
la fraction massique d'oxyde d'yttrium dans le revêtement Y est supérieure à celle dans le revêtement Z.

13. Filtre à particules selon l'une quelconque des revendications précédentes, **caractérisé en ce que** tous les oxydes mixtes de cérium/zirconium/métal de terres rares du revêtement Z sont activés avec du palladium, du platine ou du palladium et du platine.

14. Filtre à particules selon l'une quelconque des revendications 1 à 12, **caractérisé en ce que** les oxydes mixtes de cérium/zirconium/métal de terres rares des revêtements Y et Z sont activés respectivement avec du palladium ou du rhodium, ou du palladium et du rhodium.

15. Filtre à particules selon l'une quelconque des revendications précédentes,
**caractérisé en ce que** le rapport de la quantité appliquée du revêtement Z à la quantité appliquée du revêtement Y se situe dans la plage allant de 3:1 à 1:3.

16. Procédé d'élimination de particules, de monoxyde de carbone, d'hydrocarbures et d'oxydes d'azote du gaz d'échappement de moteurs à combustion interne fonctionnant avec un mélange stœchiométrique air/carburant, qui **est caractérisé en ce que** le gaz d'échappement est guidé sur un filtre à particules selon l'une quelconque des revendications 1 à 15.

1

5

8

3

4

10

2

7

5

9

6

10

15

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1657410 A2
- EP 2042226 A2
- DE 102011050788 A1
- FR 3020091 A1
- EP 3205388 A1
- EP 3207989 A1
- EP 3254757 A1
- EP 3207977 A1
- EP 3207978 A1
- EP 3207987 A1
- EP 3207990 A1
- EP 3162428 A1
- WO 2016133086 A1
- WO 2016133085 A1
- WO 18056246 A1
- WO 17109514 A1
- US 2009193796 A1
- JP 2014117680 A
- CN 10829585 A
- WO 16133085 A1
- DE 102018111246